# EUROPEAN PATENT APPLICATION

(11) **EP 4 296 992 A1**
(43) Date of publication of application: **27.12.2023**
(21) Application number: 23173582.0
(22) Date of filing: 16.05.2023
(51) Int. Cl.: G08G 3/02, G01S 13/937

(54) **APPARATUS AND METHOD FOR ADAPTIVELY DETERMINING TARGET AREA FOR VESSELS**

(30) Priority: 14.06.2022 US 202217840595
(71) Applicant: Furuno Electric Company Limited, Hyogo 662-8580 (JP)
(72) Inventor: WADA, Tomoo, Nishinomiya-City, 662-8580 (JP)
(74) Representative: Müller Hoffmann & Partner

(57) **Abstract**

Various embodiments of the present disclosure provide an apparatus and method for determining the target area associated with the vessel. The apparatus includes a motion data receiver and processing circuitry. The motion data receiver is configured to determine a motion-related data of a vessel. The processing circuitry is communicably coupled to the motion data receiver. Further, the processing circuitry is configured to cause the apparatus to determine a change in a moving direction of the vessel based at least on the motion-related data of the vessel. Furthermore, the processing circuitry is configured to adaptively determine a target area associated with the vessel based on the change in the moving direction of the vessel, thereby enabling the apparatus to determine the target area based on the change in the moving direction of the vessel.

## Description

### TECHNICAL FIELD

The present disclosure generally relates to navigation and motion control techniques for vessels and, more particularly relates, to an apparatus and method for adaptively determining a target area *(e.g.,* a guard zone or a protective zone) for a safe movement of a vessel.

### BACKGROUND

In a marine environment, vessels can navigate freely and may follow any route for reaching their destinations. This free motion of vessels may lead to various unwanted situations where the vessels may have a risk of colliding with any other vessels, landmass, or any other objects in the water body. Additionally, since most vessels are unable to go backward, they cannot quickly change their heading directions, or quickly come to a halt, therefore the possibility of collision, while the vessels are moving, remains high. To address this issue, a captain of a vessel may set a target area or a guard zone at a desired distance from the vessel. Such target area can be set using a "target area" setting function in an object detection device such as a RADAR device normally present on the vessel. Whenever objects such as other vessels, landmasses, underwater rock formations, debris, and buoys, are spotted inside the target area defined for the vessel, an alarm may be raised to notify the captain and the crew regarding the presence of a potentially risky object in the path of the vessel. Accordingly, necessary maneuvering of the vessel can be done to prevent a collision.

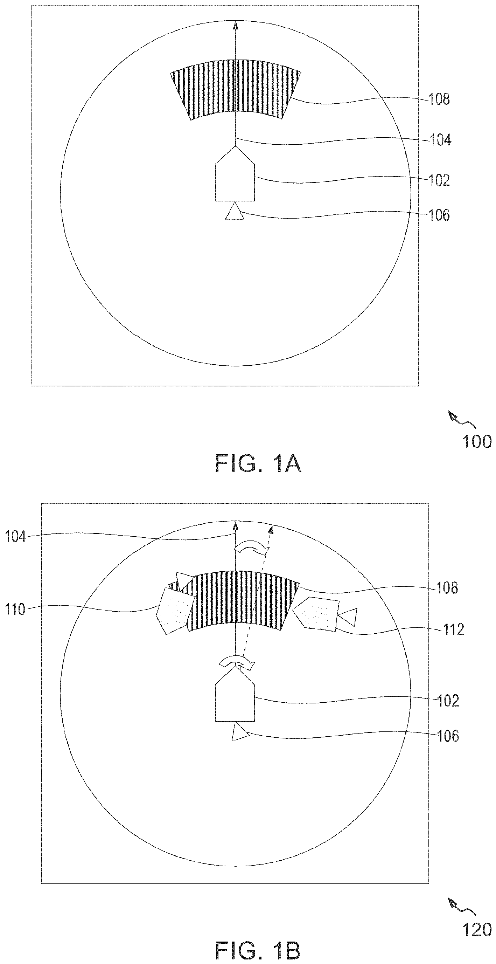

In conventional systems, a target zone of a vessel is defined based on the heading direction of the vessel, which is generally on the front side of the vessel or at an offset from the front side. A schematic representation 100 of a conventional approach for determining a target area associated with a vessel is shown in FIG. 1A. For example, an object detection device of a vessel 102 determines a target area 108 associated with the vessel 102 based on a heading direction 104 of the vessel 102. The heading direction 104 of the vessel 102 may be defined as the compass direction in which the vessel's bow is pointed. As the vessel 102 travels within the marine environment, a new target area may be constantly generated or the position of the target area 108 may be constantly shifted by the object detection device for every change in the heading direction 104 of the vessel 102. Although, the heading direction 104 is generally the same as the moving direction (*i.e.,* the direction of the actual motion of the vessel) of the vessel 102, however, it is pertinent to note that, in some scenarios, this may not be the case. For example, in a scenario 120 illustrated in FIG. 1B, where the target area 108 is determined using the conventional approach and the vessel 102 is taking a turn, an alarm may be raised as a first vessel 110 is detected within the target area 108 and no alarm will be raised for the second vessel 112 as the second vessel 112 is present outside the target area 108. Here, it is pertinent to note that since the vessel 102 is making a turn (for example, *see,* arrows) from the starboard side, there is no risk of collision of the vessel 102 with the first vessel 110 but there is a significant risk of collision with the second vessel 112. However, since the target area 108 is determined based on the heading direction 104 of the vessel 102, the target area 108 stays in its position and generates a false alarm. In this situation, the target area 108 will only be shifted to a new position when the heading direction 104 changes in response to the change in the rudder 106 position (for example, see, the dotted arrow), *i.e.,* the change in rudder angle of the vessel 102 after which an alarm may be raised due to the presence of the second vessel 112 in the newly shifted target zone (*i.e.,* the near-future target zone). However, by then course corrective actions may not be possible anymore, and a collision may take place thereby, causing damage or other losses to the vessel 102 or its occupants.

Therefore, when the vessel 102 is changing its direction, the conventional approach fails to raise an alarm due to any object that may lie in the near-future target zone of the vessel 102. Further, if an object comes within the target area 108 determined based on the heading direction 104, an unnecessary alarm will be raised even though there is no risk of collision between the vessel 102 and the object since the moving direction of the vessel 102 is different from the heading direction 104. Therefore, there is a need for an approach for determining the target area of the vessel in a safer manner to overcome one or more limitations stated above in addition to providing other technical advantages.

### SUMMARY

There exists a need for techniques to overcome one or more limitations stated above such as an inaccurate target area determined based on the heading direction of a vessel. Various embodiments of the present disclosure provide an apparatus and method for accurately determining a target area associated with a vessel in a marine environment. The disclosed technique enables better target detection and ensures a safe voyage for the vessel in the marine environment.

To achieve the above and other objectives of the present disclosure, in one aspect, an apparatus is disclosed. The apparatus includes a motion data receiver and processing circuitry. The motion data receiver is configured, at least in part, to determine a motion-related data of a vessel. The processing circuitry is communicably coupled to the motion data receiver. Further, the processing circuitry includes a moving direction monitoring module and a target area determination module. The moving direction monitoring module is configured to determine a change in a moving direction of the vessel based at least on the motion-related data of the vessel. The target area determination module is configured to adaptively determine a target area associated with the vessel based on the change in the moving direction of the vessel.

An advantage of some embodiments is that it allows for the determination of a target area associated with the vessel based on the change in the moving direction of the vessel. Therefore, by relying on this approach, a near-future target area may be determined as soon as the moving direction of the vessel changes, which effectively allows the detection of an object that may be on a collision course with the vessel due to a change in the moving direction of the vessel.

In an aspect, the moving direction being determined by the processing circuitry is an instantaneous moving direction. The target area determination module is then configured to adaptively determine the target area by calculating a shift from a current target area to a new target area based on an instantaneous change in the moving direction. An advantage of some embodiments is that the new target area which is being determined will always be in line with the instantaneous moving direction of the vessel. Therefore, if any change in the moving direction is made, a change in the target area is instantaneously made as well.

In an aspect, the motion data receiver is further configured to determine the motion-related data of the vessel based on rudder angle data received from a rudder reference unit associated with the vessel. An advantage of some embodiments is that when the motion-related that is determined based on rudder angle data is used by the processing circuitry to determine the change in moving direction of the vessel, then the overall accuracy of the determined change in moving direction is improved.

In an aspect, the motion data receiver is further configured to determine the motion-related data of the vessel based on steering wheel angle data received from a steering wheel associated with the vessel. An advantage of some embodiments is that when the motion-related that is determined based on steering wheel angle data is used by the processing circuitry to determine the change in moving direction of the vessel, then the overall accuracy of the determined change in moving direction is improved.

In an aspect, the motion data receiver is further configured to determine the motion-related data of the vessel based on heading deviation data received from a heading sensor associated with the vessel. An advantage of some embodiments is that when the motion-related that is determined based on heading deviation data is used by the processing circuitry to determine the change in moving direction of the vessel, then the overall accuracy of the determined change in moving direction is improved.

In an aspect, the motion data receiver is further configured to receive route data of the vessel from a user interface. This route data may include a plurality of waypoints. Further, the motion-related data may be determined based on the received route data. An advantage of some embodiments is that when the motion-related that is determined based on route data is used by the processing circuitry to determine the change in moving direction of the vessel, then the overall accuracy of the determined change in moving direction is improved.

In an aspect, the apparatus further includes an object detection device including at least one of a radar, a sonar, and a navigation device, such that it is communicably coupled to the processing circuitry. This object detection device is configured to obtain location data of one or more objects within a predetermined area. Herein, the predetermined area is based at least on an operating range associated with the object detection device. Then, the processing circuitry is configured to receive the location data from the object detection device, and includes an alarm signal generator. The alarm signal generator is configured to trigger an alarm signal based at least on determining if one or more objects are located in the target area.

An advantage of some embodiments is that if an object that is at risk of collision with the vessel moves within the target area of the vessel, then an alarm is raised to warn the crew. This enables the crew to take corrective measures in time to prevent the collision thus, eliminating the risk of any damage or casualty.

In an aspect, the apparatus further includes a user interface communicably coupled to the motion data receiver and the processing circuitry. This user interface is configured to receive one or more user inputs related to a position and a layout of the target area. Further, the processing circuitry includes a display signal generator. Further, the user interface is also configured to receive a display signal, transmitted by the display signal generator, for facilitating the display of the target area associated with the vessel to a user. An advantage of some embodiments is that the user is able to change the operating parameters being used to determine the position or layout of the target zone. Further, the user interface also allows the user to interact with the apparatus effectively.

In an aspect, the apparatus further includes condition determining circuitry (module) that is communicably coupled to the processing circuitry and is configured to determine set and drift condition data based on one or more set and drift conditions including at least one of a leeway motion, a steering error, and a water current condition in the vicinity of the vessel and transmit the set and drift condition data to the processing circuitry. Upon receiving this set and drift condition data, the processing circuitry is configured to determine an error value in the motion-related data based on the set and drift conditions and calibrate the motion-related data based on the determined error value.

An advantage of some embodiments is that by relying on the calibrated motion-related data to determine the change in the moving direction of the vessel, the accuracy of the determination is improved thus, improving the accuracy in determining the new target zone as well.

In another aspect, a method for determining an adaptive target area is disclosed. The method includes determining a motion-related data of a vessel. Further, the method includes determining a change in a moving direction of the vessel based at least on the motion-related data of the vessel and then, adaptively determining a target area associated with the vessel based on the change in the moving direction. As may be understood, the approach described by the present disclosure provides a technical advantage over the conventional approach by determining the target area based on the change in the moving direction of the vessel. Therefore, a near-future target area may be determined as soon as the moving direction of the vessel changes, which allows the detection of an object which is on a collision course with the vessel.

In another aspect, a non-transitory computer-readable storage medium is disclosed. The non-transitory computer-readable storage medium includes computer-executable instructions or machine-readable instructions. The machine-readable instructions, when executed by at least a processor of an apparatus, cause the apparatus to perform a method. The method performed by the apparatus includes determining a motion-related data of a vessel. Further, the method includes determining a change in a moving direction of the vessel based at least on the motion-related data of the vessel and then, adaptively determining a target area associated with the vessel based on the change in the moving direction. As may be understood, the approach described by the present disclosure provides a technical advantage over the conventional approach by determining the target area based on the change in the moving direction of the vessel. Therefore, a near-future target area may be determined as soon as the moving direction of the vessel changes, which allows the detection of an object which is on a collision course with the vessel.

### BRIEF DESCRIPTION OF THE FIGURES

The following detailed description of illustrative embodiments is better understood when read in conjunction with the appended drawings. For the purpose of illustrating the present disclosure, exemplary constructions of the disclosure are shown in the drawings. However, the present disclosure is not limited to a specific device or a tool and instrumentalities disclosed herein. Moreover, those skilled in the art will understand that the drawings are not to scale. Wherever possible, like elements have been indicated by identical numbers:
FIG. 1A illustrates a schematic representation of a conventional approach for determining a target area associated with a vessel, and FIG. 1B illustrates a schematic representation of a scenario where the target area associated with the vessel is determined using the conventional approach, as per an example;
FIG. 2 illustrates a block diagram representation of an apparatus for determining a target area associated with a vessel, in accordance with an embodiment of the present disclosure;
FIG. 3 illustrates a schematic representation of an adaptive target zone determined based on the change in moving direction of the vessel making a turn, in accordance with an embodiment of the present disclosure;
FIG. 4A illustrates a block diagram representation of an apparatus for determining the motion-related data, in accordance with an embodiment of the present disclosure;
FIG. 4B illustrates a block diagram representation of an apparatus for determining the motion-related data, in accordance with another embodiment of the present disclosure;
FIG. 4C illustrates a block diagram representation of an apparatus for determining the motion-related data, in accordance with another embodiment of the present disclosure;
FIG. 4D illustrates a block diagram representation of an apparatus for determining the motion-related data, in accordance with another embodiment of the present disclosure;
FIG. 5 illustrates a schematic representation of an example scenario depicting the embodiment associated with the apparatus of FIG. 4D;
FIG. 6A illustrates a block diagram representation of an apparatus including an object detection device, in accordance with an embodiment of the present disclosure;
FIG. 6B illustrates a block diagram representation of an apparatus including an object detection device for triggering an alarm signal, in accordance with an embodiment of the present disclosure;
FIG. 7A, FIG. 7B and FIG. 7C illustrate schematic representations of use-case scenarios of an apparatus including an object detection device, where the object detection device is a Forward-Looking Sonar (FLS), in accordance with some embodiments of the present disclosure;
FIG. 8 illustrates a block diagram representation of an apparatus including condition determining circuitry (module), in accordance with an embodiment of the present disclosure;
FIG. 9 illustrates a flow diagram of a method of operating an apparatus for adaptively determining a target area, in accordance with an embodiment of the present disclosure;
FIG. 10 illustrates a flow diagram of a method for determining a target area based on rudder angle data of a vessel, in accordance with an embodiment of the present disclosure;
FIG. 11 illustrates a flow diagram of a method for determining a target area based on steering wheel angle data of the vessel, in accordance with an embodiment of the present disclosure;
FIG. 12 illustrates a flow diagram of a method for determining a target area based on heading deviation data of the vessel, in accordance with an embodiment of the present disclosure; and
FIG. 13 illustrates a flow diagram of a method for determining a target area based on route data of the vessel in accordance with an embodiment of the present disclosure.

The drawings referred to in this description are not to be understood as being drawn to scale except if specifically noted, and such drawings are only exemplary in nature.

### DETAILED DESCRIPTION

In the following description, for purposes of explanation, numerous specific details are set forth in order to provide a thorough understanding of the present disclosure. It will be apparent, however, to one skilled in the art that the present disclosure can be practiced without these specific details. Descriptions of well-known components and processing techniques are omitted to not obscure the embodiments herein unnecessarily. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

Reference in this specification to "one embodiment" or "an embodiment" means that a particular feature, structure, or characteristic described in connection with the embodiment is included in at least one embodiment of the present disclosure. The appearances of the phrase "in an embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure.

Conditional language such as, among others, "can," "could," "might" or "may," unless specifically stated otherwise, are otherwise understood within the context as used in general to convey that certain embodiments include, while other embodiments do not include, certain features, elements and/or steps. Thus, such conditional language is not generally intended to imply that features, elements, and/or steps are in any way required for one or more embodiments or that one or more embodiments necessarily include logic for deciding, with or without user input or prompting, whether these features, elements and/or steps are included or are to be performed in any particular embodiment.

Disjunctive language such as the phrase "at least one of X, Y, or Z" unless specifically stated otherwise, is otherwise understood with the context as used in general to present that an item, term, etc., may be either X, Y, or Z, or any combination thereof *(e.g.,* X, Y, and/or Z). Thus, such disjunctive language is not generally intended to, and should not, imply that certain embodiments require at least one of X, at least one of Y, or at least one of Z to each be present.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B, and C" can include a first processor configured to carry out recitation A working in conjunction with a second processor configured to carry out recitations B and C. The same holds true for the use of definite articles used to introduce embodiment recitations. In addition, even if a specific number of an introduced embodiment recitation is explicitly recited, those skilled in the art will recognize that such recitation should typically be interpreted to mean at least the recited number (*e.g*., the bare recitation of "two recitations," without other modifiers, typically means at least two recitations, or two or more recitations).

It will be understood by those within the art that, in general, terms used herein, are generally intended as "open" terms (*e.g*., the term "including" should be interpreted as "including but not limited to," the term "having" should be interpreted as "having at least," the term "includes" should be interpreted as "includes but is not limited to," etc.).

For expository purposes, the term "vessel" refers to any ship, craft, boat, cruise, sailboat, aircraft carrier, warship, submarine, aircraft, etc., among other possible vessels.

The terms "target area", "target zone" and "guard zone" are interchangeably used throughout the description. The term `target area', or 'target zone', or the `guard zone' generally refers to an area defined at a specified distance and/or offset from the vessel using a detection device such as a RADAR, SONAR, etc., among other possible object detection devices. Whenever an object moves inside the target area of a vessel, an alarm may be raised to notify the captain and the crew regarding a potentially risky object in the path of the own vessel.

The term "object" refers to any other vessel(s), landmasses, underwater rock formation(s), debris, buoys, etc., among other possible materials or substances that may be present in the environment where the own vessel is present.

The term "rudder" refers to a primary control surface used to steer a vessel such as a ship, boat, submarine, hovercraft, aircraft, or other conveyance that moves through a fluid medium. Further, the term "rudder angle" may refer to the acute angle between the rudder and the fore-and-aft line of a vessel.

The term "steering wheel" refers to a device used aboard a vessel to steer that vessel and control its course in a fluid medium. Further, the term "steering wheel angle" may refer to the angle between the front of the vehicle and the steered wheel direction.

The term "set and drift condition" refers to any external factor that may affect a vessel and prevent it from following an intended course. These conditions may include leeway motion of the vessel, a steering error, and water current in the ocean or sea.

For expository purposes, the term "horizontal" as used herein is defined as a plane parallel to the plane or surface of the floor of the area in which the system being described is used or the method being described is performed, regardless of its orientation. The term "floor" can be interchanged with the term "ground" or "water surface." The term "vertical" refers to a direction perpendicular to the horizontal as just defined. Terms such as "above," "below," "bottom," "top," "side," "higher," "lower," "upper," "over," and "under," are defined with respect to the horizontal plane.

As used herein, the terms "attached," "connected," "mated", "coupled" and other such relational terms should be construed, unless otherwise noted, to include removable, moveable, fixed, adjustable, and/or releasable connections or attachments. The connections/attachments can include direct connections and/or connections having an intermediate structure between the two components discussed.

Numbers preceded by a term such as "approximately," "about," and "substantially" as used herein include the recited numbers, and also represent an amount close to the stated amount that still performs a desired function or achieves a desired result. For example, the terms "approximately," "about," and "substantially" may refer to an amount that is within less than 10% of the stated amount. Features of embodiments disclosed herein preceded by a term such as "approximately," "about," and "substantially" as used herein represent the feature with some variability that still performs a desired function or achieves a desired result for that feature.

Various example embodiments of the present disclosure provide apparatus and methods for adaptively determining a target area for a vessel. In an embodiment, the apparatus includes a motion data receiver and processing circuitry. The motion data receiver is configured, at least in part, to determine a motion-related data of a vessel. The processing circuitry is communicably coupled to the motion data receiver. Further, the processing circuitry is configured to cause the apparatus, at least in part, to determine a change in a moving direction of the vessel based at least on the motion-related data of the vessel. Furthermore, the processing circuitry is configured to adaptively determine a target area associated with the vessel based on the change in the moving direction of the vessel. Therefore, the approach described by the present disclosure provides a technical advantage over the conventional approach by enabling the apparatus to determine the target area based on the change in the moving direction of the vessel. Therefore, a near-future target area may be determined as soon as the moving direction of the vessel changes, which allows the detection of an object which may be prone to a collision with the vessel.

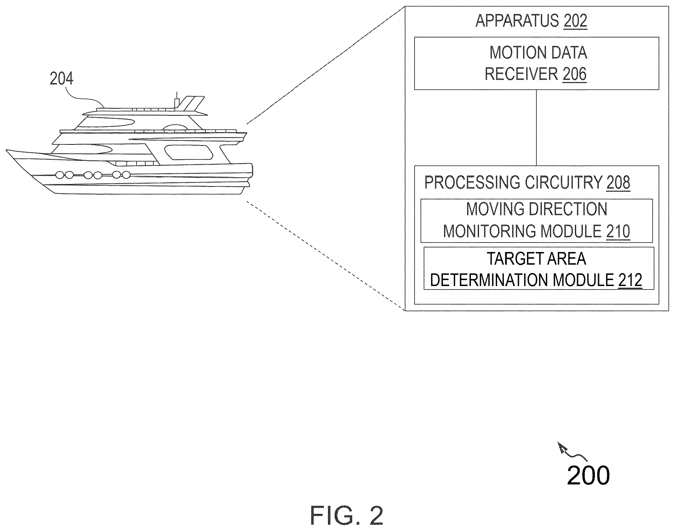

Various embodiments of the present disclosure are described hereinafter with reference to FIG. 2 to FIG. 13.

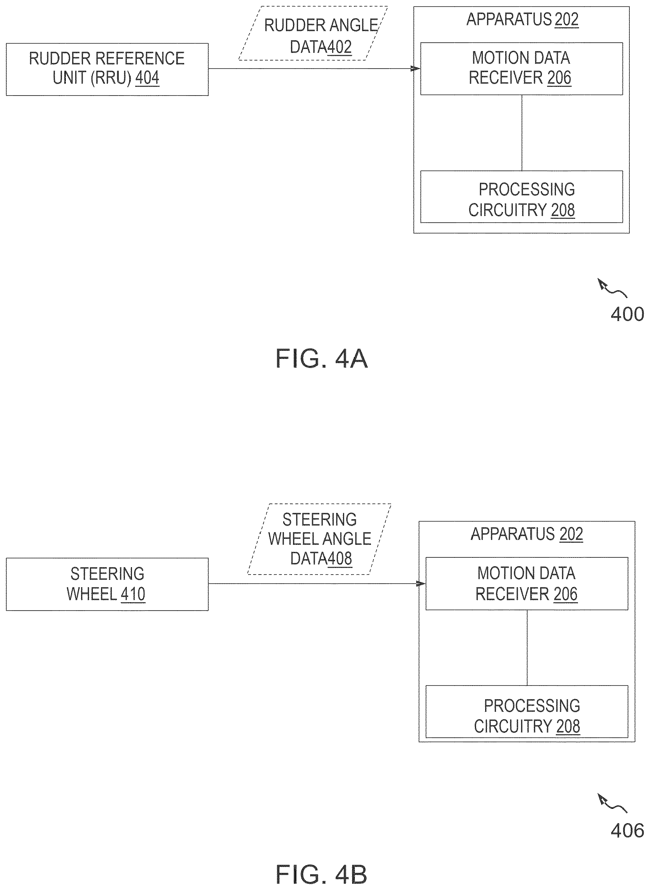

FIG. 2 illustrates a representation 200 of an apparatus 202 for determining a target area associated with a vessel 204, in accordance with at least one embodiment of the present disclosure. The apparatus 202 includes a motion data receiver 206 and processing circuitry 208 such as a controller or a control unit. The motion data receiver 206 may be configured to determine a motion-related data of a vessel 204. In various embodiments of the present disclosure, the motion-related data may be determined using rudder angle data, steering angle data, a rate of turn, heading deviation data, or the route data of the vessel 204. The motion data receiver 206 is communicably or operatively linked with other components of the vessel 204 to receive information related to the motion of the vessel 204. Some examples of these components are described with reference to FIGS. 4A to 4D.

The processing circuitry 208 can be configured in a variety of ways using hardware configurations, embedded systems, control logical blocks, software modules, and their combinations. The processing circuitry 208 at least includes a moving direction monitoring module 210 and a target area determination module 212. The processing circuitry 208 is communicably coupled to the motion data receiver 206 via wired and/or wireless linkages. The moving direction monitoring module 210 may be configured to cause the apparatus 202 to determine a change in the moving direction of the vessel 204 based at least on the motion-related data of the vessel 204. In an example, the moving direction of the vessel 204 may be the instantaneous moving direction of the vessel 204. Further, the target area determination module 212 may be configured to adaptively determine a target area associated with the vessel 204 based on the instantaneous change in the moving direction of the vessel 204. As may be understood, adaptively determining the target area may include calculating a shift from a current target area to a new target area (or a near-future target area) based on the change in the moving direction of the vessel 204. In another embodiment, the target area may be dynamically shifted, moved, or rotated by the processing circuitry 208 based on the instantaneous moving direction of the vessel 204.

In an embodiment, either or both of the motion data receiver 206 and the processing circuitry 208 may include at least one processor and memory (not shown for the sake of brevity). The memory may be capable of storing executable instructions, whereas the processor may be capable of executing instructions to perform the operations described herein. The memory may include suitable logic, circuitry, and/or interfaces to store a set of computer-readable instructions for performing operations described herein. In an embodiment, the memory may be embodied as one or more volatile memory devices, one or more non-volatile memory devices, and/or a combination of one or more volatile memory devices and non-volatile memory devices. Examples of the memory include a random-access memory (RAM), a read-only memory (ROM), a removable storage drive, and the like. The processor may be embodied in a number of different ways. The processor may be embodied as a multi-core processor, a single-core processor; or a combination of multi-core processors and single-core processors. For example, the processor may be embodied as one or more of various processing means such as a coprocessor, a microprocessor, a controller, a digital signal processor (DSP), processing circuitry with or without an accompanying DSP, or various other processing devices including integrated circuits such as, for example, an application-specific integrated circuit (ASIC), a field-programmable gate array (FPGA), a microcontroller unit (MCU), a hardware accelerator, a special-purpose computer chip, or the like. In an example embodiment, the multi-core processor may be configured to execute instructions that can be accessible to the processor. Alternatively or additionally, the processor may be configured to execute hard-coded functionality. As such, whether configured by hardware or software methods, or by a combination thereof, the processor may represent one or more entities *(e.g.,* the moving direction monitoring module 210 and the target area determination module 212), for example, physically embodied in circuitry, capable of performing operations according to various embodiments while configured accordingly.

In an embodiment, the memory of the motion data receiver 206 may store instructions for enabling the processor to determine the motion-related data of a vessel 204. In an embodiment, the memory of the processing circuitry 208 may store instructions for enabling the processor to determine a change in the moving direction of the vessel 204 based at least on the motion-related data of the vessel 204.

In various forms, the apparatus 202 may be implemented by object detection devices such as radio detection and ranging (RADAR) device, sound navigation and ranging (SONAR) device, forward-looking SONAR (FLS), a navigation device, etc., among other possible object detection devices. The apparatus 202 may be implemented onboard and/or off-board the vessel 204. In those forms, in which the apparatus 202 is implemented off-board the vessel 204, the apparatus 202 may be operatively coupled with the onboard electronics of the vessel 204 through a wired and/or wireless connection.

In an embodiment, the operation of determining the target area associated with the vessel 204 by the apparatus 202 may be performed after receiving a command or instruction from an operator, captain, or an autopilot system of the vessel 204 through a user interface. In an example, parameters for the target area may also be shared with the apparatus 202 through a user interface. These parameters may include, but are not limited to, the position and layout of the target area with respect to the vessel 204, an offset in the target area, and the dimensions of the target area.

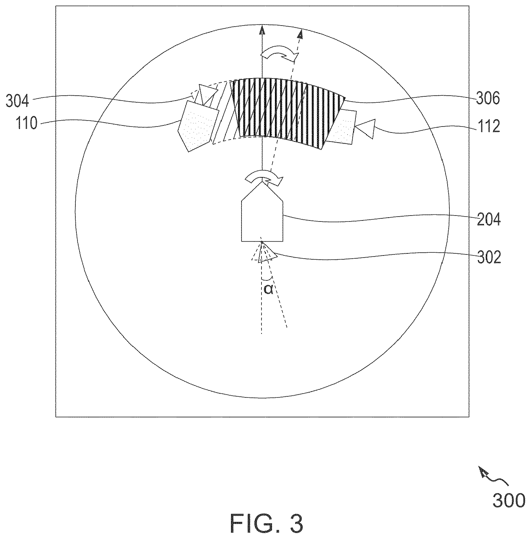

FIG. 3 illustrates a schematic representation 300 of an adaptive target zone determined based on the change in moving direction of a vessel 204 making a turn, as per an embodiment of the present disclosure. In an example, when the operator of the vessel 204 rotates the steering wheel associated with the vessel 204, the rudder 302 of the vessel 204 changes its position (for example, see the change in position between the dotted rudder and solid rudder in FIG. 3) by an angle depicted by 'α'. In another example, an auto-pilot system may change the course of the vessel 204 by changing the position of the rudder 302, thus changing the rudder angle 'α' of the vessel 204 as well. This change in the rudder angle 'α' causes a change in the moving direction of the vessel 204. The apparatus 202 detects this change in the moving direction of the vessel 204 and adaptively determines a target area 306 associated with the vessel 204 based on this change in the moving direction. As may be noted, the new target area 306 indicates the region in the moving direction of the vessel 204. As the rudder 302 of the vessel 204 changes its position, the moving direction of the vessel 204 changes. Due to this change in the moving direction of the vessel 204, the previous target area 304 is adaptively shifted or rotated to the new target area 306. Now, since the second vessel 112 is present in the newly shifted target area 306, an alarm may be raised by the apparatus 202 for warning the crew of the vessel 204. It is to be noted that although the first vessel 110 lies in the heading direction 104 of the vessel 204, no alarm shall be raised because the first vessel 110 poses no risk of collision with the own vessel 204 due to the change in the moving direction of the vessel 204, *i.e.,* the first vessel 110 no longer lies on the course of the instantaneous moving direction of the vessel 204. Therefore, the approach of the present disclosure overcomes the technical problem faced by the conventional target area determination techniques.

FIG. 4A illustrates a block diagram representation 400 of the apparatus 202 for determining the motion-related data, in accordance with an embodiment of the present disclosure. In the illustrated embodiment of FIG. 4A, the apparatus 202 utilizes rudder angle data 402 for determining the motion-related data of a vessel such as the vessel 204. To that effect, the motion data receiver 206 may be operatively coupled with a component such as a Rudder Reference Unit (RRU) 404 associated with the vessel 204. The motion data receiver 206 may receive rudder angle data 402 from an RRU 404 present inside the vessel 204. This rudder angle data 402 may then be used by the motion data receiver 206 to determine motion-related data of the vessel 204. In this scenario, the motion-related data may indicate a change in the rudder angle 'α' over a period of time. In an alternative embodiment, the rudder angle data 402 may be received from a rudder feedback unit. In another alternative embodiment, the rudder angle data 402 may be received from an autopilot system associated with the vessel 204. As may be understood, either of the RRU 404 and the rudder feedback unit may provide information on rudder operation with an autopilot system of the vessel 204, thus enabling the autopilot system to precisely control the movement of the vessel 204. This autopilot functionality may be enabled using a device such as, but not limited to, a navigation device or a chart plotter, present onboard or off-board the vessel 204. In an example, the rudder angle data 402 may be measured in degrees or radians. For instance, the rudder angle 'α' of a shipping vessel may lie between -0.39 to 0.39 rad, and the range for the rudder is generally 0.78 rad.

FIG. 4B illustrates a block diagram representation 406 of the apparatus 202 for determining the motion-related data, in accordance with another embodiment of the present disclosure. In the illustrated embodiment of FIG. 4B, the apparatus 202 utilizes steering wheel angle data 408 for determining the motion-related data of the vessel 204. To that effect, the motion data receiver 206 may be operatively coupled to a component such as a steering wheel 410 associated with the vessel 204. The motion data receiver 206 may receive steering wheel angle data 408 from the steering wheel 410. In an example, the steering wheel angle data 408 may be measured in degrees or radians. This steering wheel angle data 408 may then be used by the motion data receiver 206 to determine motion-related data of the vessel 204. In this scenario, the motion-related data may indicate a change in the steering wheel angle over a period of time. In an alternative embodiment, the steering wheel angle data 408 may be received from an autopilot system associated with the vessel 204. This autopilot functionality may be enabled using a device such as, but not limited to, a navigation device, present onboard or off-board the vessel 204.

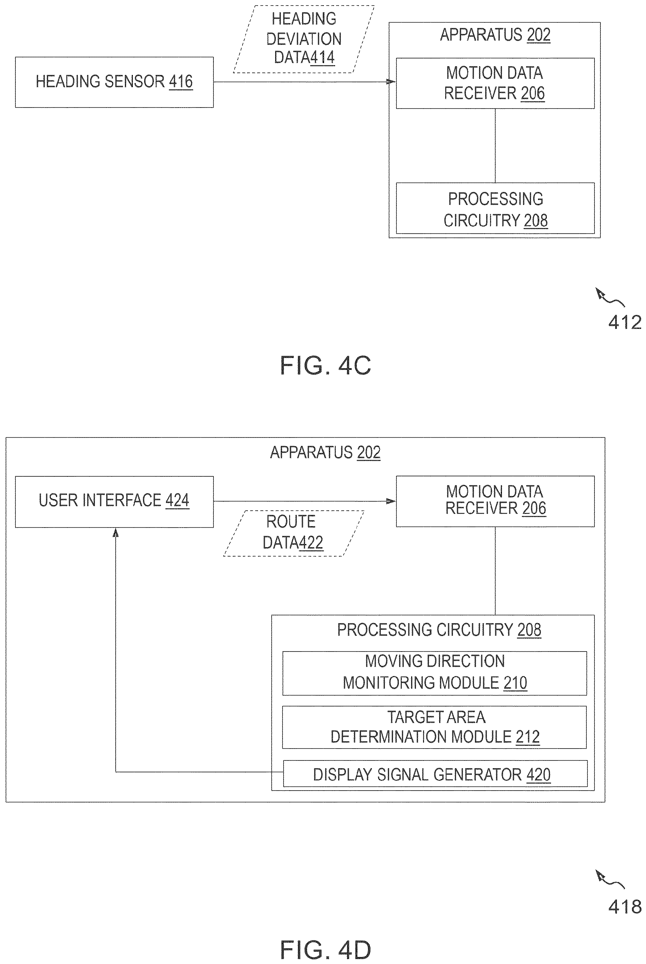

FIG. 4C illustrates a block diagram representation 412 of the apparatus 202 for determining the motion-related data, in accordance with another embodiment of the present disclosure. In the illustrated embodiment of FIG. 4C, the apparatus 202 utilizes heading deviation data 414 for determining the motion-related data of the vessel 204. To that effect, the motion data receiver 206 may be operatively coupled to a component such as a heading sensor 416 associated with the vessel 204. The motion data receiver 206 may receive the heading deviation data 414 from the heading sensor 416. This heading deviation data 414 may then be used by the motion data receiver 206 to determine motion-related data of the vessel 204. In this scenario, the motion-related data may indicate a change in the heading deviation data 414, *i.e.,* the rate of turn (ROT) of the vessel 204 over a period of time. In an alternative embodiment, the heading deviation data 414 may be received from an autopilot system connected with a heading sensor 416 associated with the vessel 204. This autopilot functionality may be enabled using a device such as, but not limited to, a navigation device, present onboard or off-board the vessel 204. In one example, the heading sensor 416 may include an earth's magnetic sensor, a compass, magnetic fluxgate compass, satellite compass, etc., among other possible sensors that may provide or determine heading deviation data 414 associated with the vessel 204.

FIG. 4D illustrates a block diagram representation 418 of the apparatus 202 for determining the motion-related data, in accordance with another embodiment of the present disclosure. In the illustrated embodiment of FIG. 4D, the apparatus 202 utilizes route data 422 for determining the motion-related data of the vessel 204. To that effect, the motion data receiver 206 may be operatively coupled to a user interface 424 associated with the vessel 204. The motion data receiver 206 may receive route data 422 from a user interface 424 associated with the vessel 204. The processing circuitry 208 further includes a display signal generator 420. The processing circuitry 208 is communicably coupled to the user interface 424 via wired and/or wireless linkages. The display signal generator 420 generates a display signal for facilitating the display of information pertaining to the vessel such as, but not limited to, the target area (*e.g*., target area 304, 306), a chart, navigation details, heading direction, etc., among other possible vessel information. In an embodiment, the user interface 424 may be generated by the display signal generator 420 and displayed to a user through an externally connected display device such as, but not limited to, a monitor, a TV, a projector, etc., among other suitable display devices.

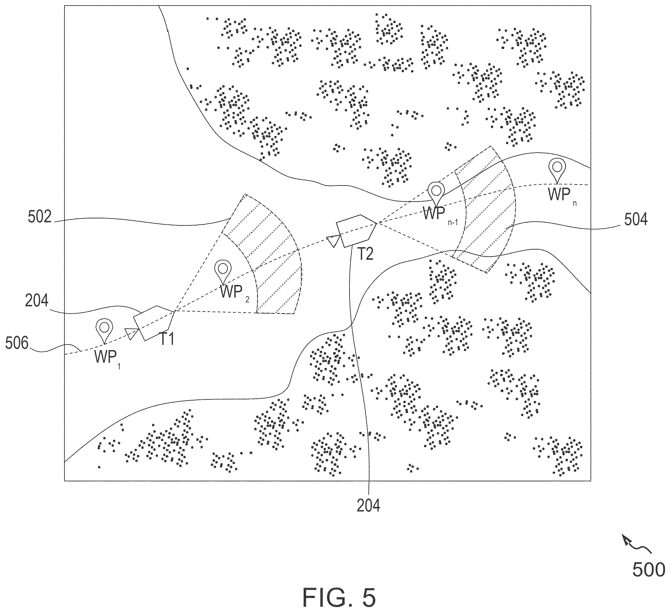

The user interface 424, in an example, may include Command Line Interface (CIL), Menu-driven Interface (MDI), Human Machine Interface (HMI), Graphical User Interface (GUI), Touchscreen Graphical User Interface (TGLTI), etc., among other suitable interfaces. In an embodiment, the user may provide the route data 422 in the form of a plurality of waypoints. Herein, a 'waypoint' may refer to a point of reference that can be used for location and navigation. Waypoints may be the specific latitude and longitude of a location, a network of buoys, or natural features in an environment. A route or course may be plotted by adding a plurality of waypoints on a map or navigation device indicating the path that may be followed for arriving at the desired destination. Waypoints may also direct the autopilot regarding which path to follow to reach the desired destination. This route data 422 may then be used by the motion data receiver 206 to determine motion-related data of the vessel 204. In this scenario, the motion-related data may indicate the change in route to be followed by the vessel 204. This aspect is explained further with the reference to FIG. 5. In an alternative embodiment, the route data 422 may be received from an autopilot system associated with the vessel 204. In another embodiment, the route data 422 may be fed to the autopilot system for plotting a route in the marine environment as well.

In an embodiment, the user interface 424 may be configured to receive one or more user inputs related to a position and a layout of the target area, that is, the user may define the various parameters while setting up a target area using the user interface 424.

FIG. 5 illustrates a schematic representation 500 of an example scenario depicting the embodiment associated with the apparatus 202 of FIG. 4D, as per an embodiment of the present disclosure. In this scenario, the movement of the vessel 204 navigating on a route (*see,* dotted line 506) at time instances T1 and T2 (such that T2>T1) is shown. The route or course being followed by the vessel 204 may be determined based on the route data 422 received from the user interface 424 associated with the vessel 204. This route data 422 may include a plurality of waypoints (*see,* WP₁, WP₂...WPₙ₋₁, WPₙ, where 'n' is a natural number). The waypoints may be used by a navigation device, a chart plotter, an electronic chart display and information system (ECDIS), an autopilot system, and/or a combination thereof to determine a desired route for the vessel 204. Further, this route may be presented to the operator of the vessel 204 on the user interface 424. As may be understood, at time instance T1, since the vessel 204 is moving straight, the target area 502 associated with the vessel 204 remains the same. However, as the route of the vessel 204 bends (*e.g*., as shown at time instance T2), the vessel 204 changes its moving direction to accommodate the change in route. This change in the route is anticipated by the motion data receiver 206 based on the received route data 422. Then, the processing circuitry 208 may adaptively determine a new target area 504 (or a future target area) associated with the vessel 204 based on the change in the moving direction of the vessel 204. This change in the target area associated with the vessel 204 may be implemented by the target area determination module 212 of the processing circuitry 208 by shifting or rotating the position of the old target area 502 to a new position for the new target area 504.

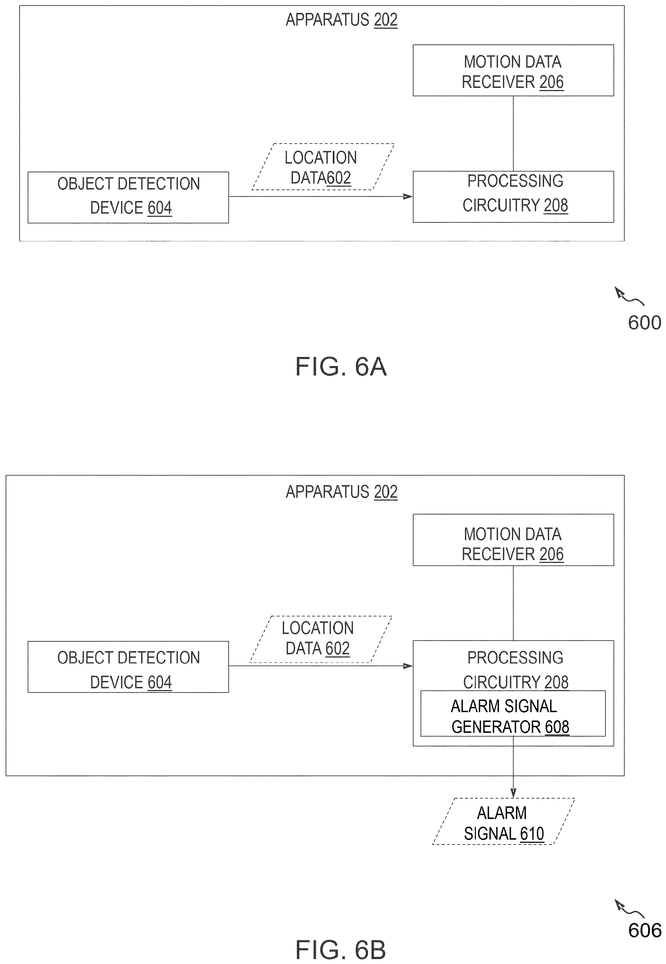

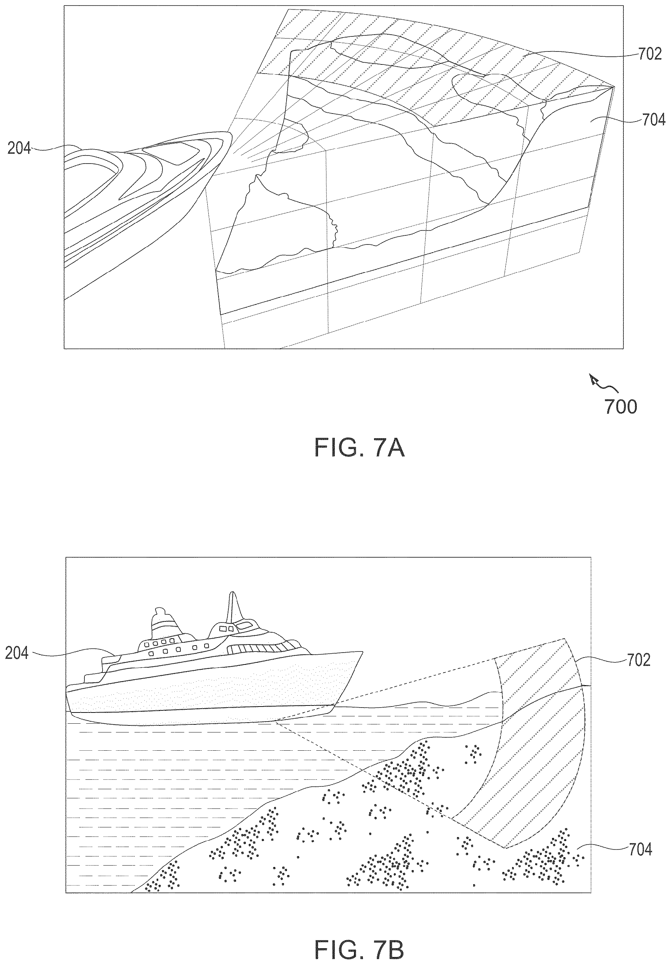

FIG. 6A illustrates a block diagram representation 600 of the apparatus 202 including an object detection device 604, in accordance with an embodiment of the present disclosure. The object detection device 604 may be communicably connected to the processing circuitry 208 of the apparatus 202. The processing circuitry 208 may further include the moving direction monitoring module 210, the target area determination module 212, and the display signal generator 420 (not shown here again for the sake of brevity). In an example, the object detection device 604 may include one or more of a radio detection and ranging (RADAR) device, sound navigation and ranging (SONAR) device, forward-looking SONAR (FLS), a Navigation device, a chart plotter, etc., among other possible detection devices. It may be configured to obtain the location data 602 of one or more objects in the surroundings of the vessel 204. As may be understood, the distance within which an object detection device 604 can perform its detection functionality reliably is generally limited based on factors such as, but not limited to, operating range, power, size, distance, etc., therefore, the object detection device 604 may be able to locate one or more objects within a predetermined area. In an example, if the object detection device 604 is a RADAR device, it may detect the presence of a plurality of other vessels and land obstacles in the surrounding of the vessel 204 within its operating range. In another example, if the object detection device 604 is a SONAR device, then the SONAR device may detect fish, underwater structures, and the seafloor around the vessel 204 within its operating range. In another example, if the object detection device 604 is a navigation device, then the navigation device may detect and display landmasses and natural features present along the route or course of the vessel 204 in the marine environment within its display resolution. In another example, if the object detection device 604 is a Forward-Looking SONAR (FLS) device, then the FLS device may detect objects present below the horizontal plane of the surface of the water body in front of the vessel 204 at a shallow depth. This example will be explained further in detail with reference to FIG. 7A to FIG. 7C later in the present disclosure.

FIG. 6B illustrates a block diagram representation 606 of the apparatus 202 including an object detection device 604 for triggering an alarm signal 610, in accordance with an embodiment of the present disclosure. The processing circuitry 208 may receive the location data 602 from the object detection device 604 and determine if any object is present in the target area associated with the vessel 204. The processing circuitry 208 further includes an alarm signal generator 608. The alarm signal generator 608 may be configured to generate an alarm signal 610 when certain conditions are met. In an embodiment, where an object is present inside the target area, the alarm signal 610 may be triggered by the alarm signal generator 608 of the processing circuitry 208. In an alternative embodiment, if no object is detected within the target area associated with the vessel 204, no alarm signal is triggered. In one example, the alarm signal 610 may cause generation of an alarm sound through speakers present onboard the vessel 204. Additionally or alternatively, the alarm signal 610 may trigger a visual output such as, but not limited to, a flashing message on one or more displays present onboard or off-board the vessel 204. In some other examples, the vessel 204 may include suitable components for vibrating a device, or blowing air on a user's face, in response to receipt of the alarm signal 610.

In another example, if the object detected in the target zone is a second vessel 112 as well (as shown in FIG. 3), then the alarm signal 610 may also be shared with the second vessel 112 by the alarm signal generator 608 to warn the other vessel regarding a potential collision. In yet another example, the alarm signal generator 608 may transmit the alarm signal 610 to an autopilot system. Upon receiving the same, the autopilot system may perform course corrections or halt the vessel 204 to prevent the collision from occurring.

FIG. 7A illustrates a schematic representation 700 of a use-case scenario of an apparatus including an object detection device being an FLS device, as per an embodiment of the present disclosure. It should be noted that the FLS device is just one example of the object detection device 604 and that other detection devices such as a RADAR device, a SONAR device, a LiDAR device, Long Range Tracking and Identification (LRIT) system, etc., among other suitable detection devices may also be used individually or in any combination. FLS devices are designed for surface ship navigation and obstacle avoidance while being useful in shallow water navigation. Without loss of generality, FLS devices are generally mounted on the bow of the vessel 204 (as shown in FIG. 7B) and detect objects in the forward direction relative to the bow of the vessel 204 below the horizontal plane of the surface of the water body.

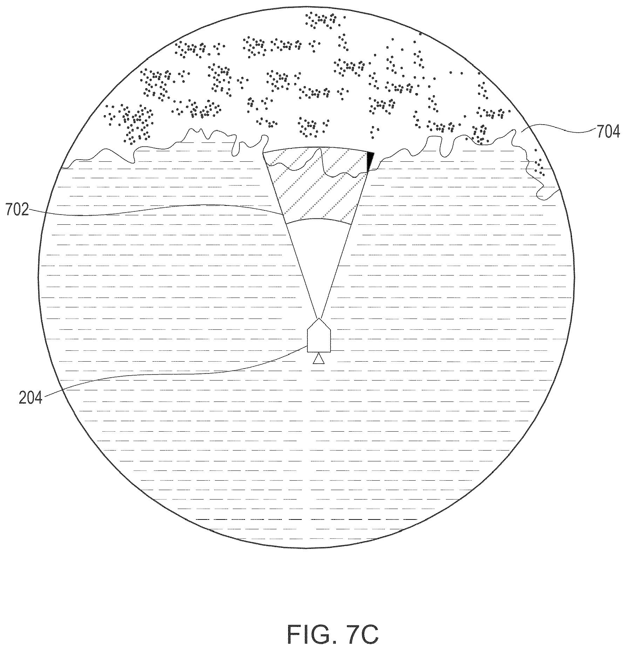

As per the example scenario described in FIG. 7A, one or more land features 704 such as a ridge are detected by the FLS as the vessel 204 navigates in the marine environment. Then, the location data 602 associated with the one or more land features 704 are shared with the processing circuitry 208. Upon receiving this location data 602, the processing circuitry 208 may determine if an object is present in the target area 702 associated with the vessel 204. In this scenario, since the land feature 704 lies within the target area 702 associated with vessel 204 (as shown in FIG. 7C), the alarm signal 610 may be generated by the alarm signal generator 608.

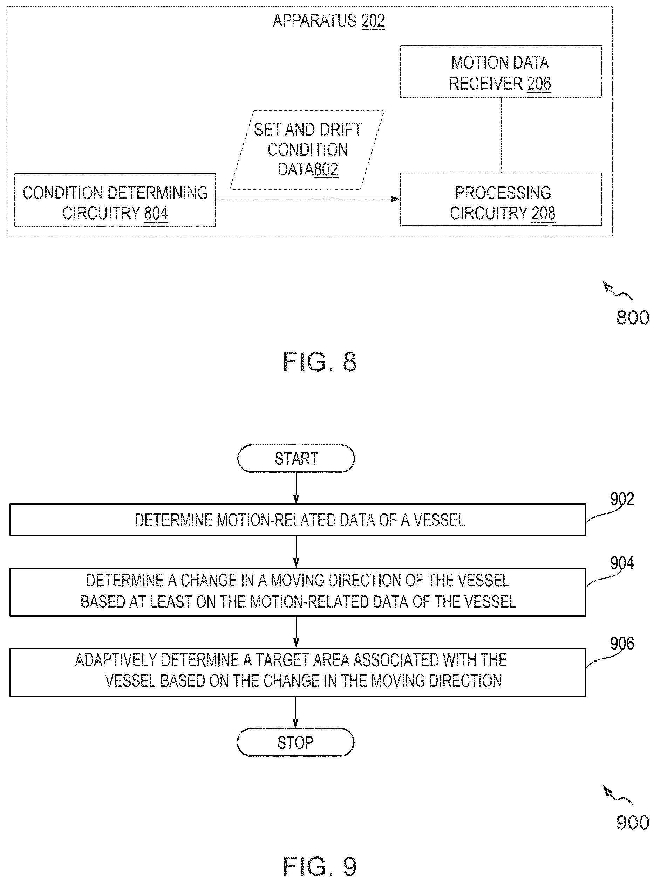

FIG. 8 illustrates a block diagram representation 800 of the apparatus 202 including condition determining circuitry (module) 804, in accordance with an embodiment of the present disclosure. In an embodiment, the condition determining circuitry 804 may be communicably coupled to the processing circuitry 208. In an alternate embodiment, the condition determining circuitry 804 may be implemented within the processing circuitry 208 as a single chip, a stacked chip, etc., among other suitable implementations. In an example, the condition determining circuitry 804 may be implemented as a module or block within the processing circuitry 208 as well. This condition determining circuitry 804 may be configured to determine set and drift condition data 802 based on one or more set and drift conditions in the vicinity or surrounding of the vessel 204. In an example, the set and drift conditions may include at least one of a leeway motion due to the air currents, a steering error due to mechanical problems, and water current due to wind, water flow, other vessels, etc., among other suitable conditions producing a change in the motion of the vessel 204 in a fluid environment. This set and drift condition data 802 may be transmitted to the processing circuitry 208 either wirelessly or through wired communication. Upon receiving this data, the processing circuitry 208 may determine an error value in the motion-related data received from the motion data receiver 206. Then, based on this error value, the processing circuitry 208 may calibrate the motion-related data. As may be understood, conditions such as the leeway motion, water current, and/or steering current may change the moving direction of the vessel 204 even while the motion-related data remains the same, thereby leading to an incorrect determination of the target area. Therefore, by determining an error value and calibrating the motion-related data based on it, the true change in the moving direction of the vessel 204 may be determined. Due to this error compensation based on the set and drift conditions in the vicinity of the vessel 204, the apparatus 202 ensures accurate target area determination in real-world scenarios.

FIG. 9 illustrates a flow diagram of a method 900 of operating the apparatus 202 for adaptively determining a target area, in accordance with an embodiment of the present disclosure. The method 900 depicted in the flow diagram may be executed either one or a combination of, for example, the motion data receiver 206 and the processing circuitry 208. The steps of the flow chart are performed when the apparatus 202 is used for adaptively determining the target area associated with the vessel 204. The sequence of operations of the flow chart may not be necessarily executed in the same order as they are presented. Further, one or more operations may be grouped together and performed in form of a single step, or one operation may have several sub-steps that may be performed in parallel or in a sequential manner. It should be appreciated that the steps of the flow chart are executed when an operator or captain interacts with the user interface 424 to determine a target area. The method 900 starts at operation 902.

At operation 902, the method 900 includes determining a motion-related data. In an embodiment, the motion-related data may be determined by the motion data receiver 206. In various examples, the motion related data may be the change in rudder angle α over a period of time, the change in steering wheel angle over a period of time, the rate of turn (ROT) of the vessel 204, or the change in route to be followed by the vessel 204, etc., among other suitable data that may indicate towards the change in moving direction of the vessel 204.

At operation 904, the method 900 includes determining a change in a moving direction of the vessel 204 based at least on the motion-related data of the vessel 204. In an embodiment, the change in the moving direction of the vessel 204 may be determined by the moving direction monitoring module 210 of the processing circuitry 208. In another embodiment, the moving direction of the vessel 204 may be an instantaneous moving direction. In yet another embodiment, an error value in the motion-related data determined in the previous step, *i.e.,* operation 902, may be determined using a set and drift condition data 802 that may be received from condition determining circuitry 804 described with reference to FIG. 8. Further, the motion-related data may be calibrated based on the determined error value. Furthermore, the calibrated motion-related data may be used for determining the change in the moving direction of the vessel 204.

At operation 906, the method 900 includes adaptively determining a target area associated with the vessel 204 based on the change in the moving direction. In an embodiment, the target area determination module 212 of the processing circuitry 208 may determine a new target area 306 by shifting a current target area 304 to a new target area 306 based on the instantaneous change in the moving direction of the vessel 204. In another embodiment, the method 900 may include generating a display signal and transmitting the display signal to a user interface 424 for facilitating the display of the target area associated with the vessel 204. In an example, this display signal may be generated and transmitted by the display signal generator 420 of the processing circuitry 208 to a user interface 424.

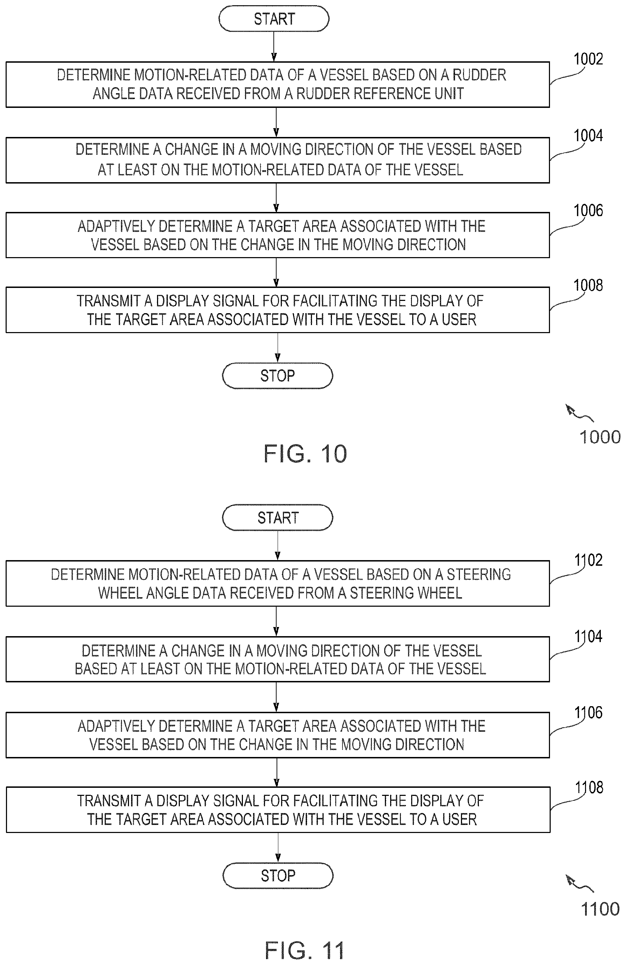

FIG. 10 illustrates a flow diagram of a method 1000 for determining a target area based on the rudder angle data 402 of the vessel 204, in accordance with an embodiment of the present disclosure. The method 1000 depicted in the flow diagram may be executed by either one of or a combination, for example, the motion data receiver 206 and the processing circuitry 208. The steps of the flow chart are performed when the apparatus 202 is used for adaptively determining the target area associated with the vessel 204. The sequence of operations of the flow chart may not be necessarily executed in the same order as they are presented. Further, one or more operations may be grouped together and performed in form of a single step, or one operation may have several sub-steps that may be performed in parallel or in a sequential manner. The method 1000 starts at operation 1002.

At operation 1002, the method 1000 includes determining motion-related data of a vessel 204 based on rudder angle data 402 received from a rudder reference unit (RRU) 404. In an embodiment, the motion data receiver 206 may determine the motion-related data of the vessel 204. This rudder angle data 402 may then be used by the motion data receiver 206 to determine motion-related data of the vessel 204. This motion-related data may indicate a change in the rudder angle α over a period of time. In an example, the rudder angle data 402 may be in degrees or radians. In another example, the rudder angle α of a shipping vessel 204 may lie between -0.39 to 0.39 rad, and the range for the rudder is generally 0.78 rad. In an alternative embodiment, the rudder angle data 402 may be received from a rudder feedback unit or an autopilot system instead.

At operation 1004, the method 1000 includes determining a change in the moving direction of the vessel 204 based on the motion-related data of the vessel 204. It should be noted that operation 1004 is analogous to operation 904 described with reference to FIG. 9. Therefore, it is not explained here again for the sake of brevity.

At operation 1006, the method 1000 includes adaptively determining a target area associated with the vessel 204 based on the change in the moving direction. It should be noted that operation 1006 is analogous to operation 906 described with reference to FIG. 9. Therefore, it is not explained here again for the sake of brevity.

At operation 1008, the method 1000 includes transmitting a display signal for facilitating the display of the target area associated with the vessel 204 to a user. In an embodiment, the display signal is generated and transmitted by the display signal generator 420 of the processing circuitry 208. In an example, the display signal is transmitted to a user interface 424 for facilitating the display of the target area associated with the vessel 204.

FIG. 11 illustrates a flow diagram of a method 1100 for determining a target area based on the steering wheel angle data 408 of the vessel 204, in accordance with an embodiment of the present disclosure. The method 1100 depicted in the flow diagram may be executed by either one of or a combination of, for example, the motion data receiver 206 and the processing circuitry 208. The steps of the flow chart are performed when the apparatus 202 is used for adaptively determining the target area associated with the vessel 204. The sequence of operations of the flow chart may not be necessarily executed in the same order as they are presented. Further, one or more operations may be grouped together and performed in form of a single step, or one operation may have several sub-steps that may be performed in parallel or in a sequential manner. The method 1100 starts at operation 1102.

At operation 1102, the method 1100 includes determining motion-related data of a vessel 204 based on steering wheel angle data 408 received from a steering wheel 410 associated with the vessel 204. In an example, the steering wheel angle data 408 may be in degrees or radians. In an embodiment, the motion data receiver 206 may determine the motion-related data of the vessel 204. This steering wheel angle data 408 may be used by the motion data receiver 206 to determine motion-related data of the vessel 204. In an example, the motion-related data may indicate a change in the steering wheel angle over a period of time.

At operation 1104, the method 1100 includes determining a change in the moving direction of the vessel 204 based on the motion-related data of the vessel 204. It should be noted that operation 1104 is analogous to operation 904 described with reference to FIG. 9. Therefore, it is not explained here again for the sake of brevity.

At operation 1106, the method 1100 includes adaptively determining a target area associated with the vessel 204 based on the change in the moving direction of the vessel 204. It should be noted that operation 1106 is analogous to operation 906 described with reference to FIG. 9. Therefore, it is not explained here again for the sake of brevity.

At operation 1108, the method 1100 includes transmitting a display signal for facilitating the display of the target area associated with the vessel to a user. It should be noted that operation 1108 is analogous to operation 1008 described with reference to FIG. 10. Therefore, it is not explained here again for the sake of brevity.

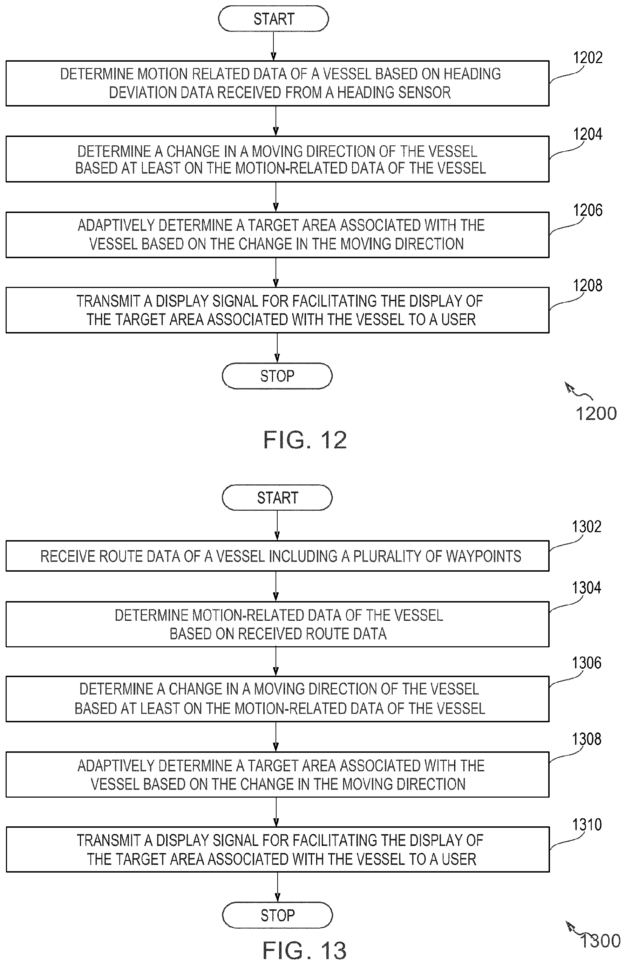

FIG. 12 illustrates a flow diagram of a method 1200 for determining a target area based on the heading deviation data 414 of the vessel 204, in accordance with an embodiment of the present disclosure. The method 1200 depicted in the flow diagram may be executed by either one of or a combination of, for example, the motion data receiver 206 and the processing circuitry 208. The method 1200 starts at operation 1202.

At operation 1202, the method 1200 includes determining motion-related data of a vessel 204 based on heading deviation data 414 received from a heading sensor 416 associated with the vessel 204. In an embodiment, the motion data receiver 206 may determine the motion-related data of the vessel 204. This heading deviation data 414 may then be used by the motion data receiver 206 to determine motion-related data of the vessel 204. In an example, the motion-related data may indicate a change in the heading direction, *i.e.,* the rate of turn of the vessel 204 over a period of time. In an example, the heading deviation data 414 may be in degrees or radians. In another example, the heading sensor 416 may include an earth's magnetic sensor, a compass, magnetic fluxgate compass, satellite compass, etc., among other possible sensors that may provide or determine heading deviation data 414 associated with a vessel 204.

At operation 1204, the method 1200 includes determining a change in the moving direction of the vessel 204 based on the motion-related data of the vessel 204. It should be noted that operation 1204 is analogous to operation 904 described with reference to FIG. 9. Therefore, it is not explained here again for the sake of brevity.

At operation 1206, the method 1200 includes adaptively determining a target area associated with the vessel 204 based on the change in the moving direction. It should be noted that operation 1206 is analogous to operation 906 described with reference to FIG. 9. Therefore, it is not explained here again for the sake of brevity.

At operation 1208, the method 1200 includes transmitting a display signal for facilitating the display of the target area associated with the vessel to a user. It should be noted that operation 1208 is analogous to operation 1008 described with reference to FIG. 10. Therefore, it is not explained here again for the sake of brevity.

FIG. 13 illustrates a flow diagram of a method for determining a target area based on the route data 422 of the vessel 204 in accordance with an embodiment of the present disclosure. The method 1300 depicted in the flow diagram may be executed by either one of or a combination of, for example, the motion data receiver 206 and the processing circuitry 208. The method 1300 starts at operation 1302.

At operation 1302, the method 1300 includes receiving route data 422 of a vessel 204 including a plurality of waypoints. In an embodiment, the route data 422 may be received from a user through a user interface 424 or an autopilot system. In an example, this route data 422 may be in the form of a plurality of waypoints defining the route or course to be followed by the vessel 204. In another example, the route data 422 may be used to plot a route on a navigation device or a chart plotter such that it may be visible to the user through the user interface 424.

At operation 1304, the method 1300 includes determining motion-related data of a vessel 204 based on the route data 422 received from the user. In an embodiment, the motion data receiver 206 may determine the motion-related data of the vessel 204. In an example, the motion-related data may indicate the change in route being followed by the vessel 204.

At operation 1306, the method 1300 includes determining a change in the moving direction of the vessel 204 based on the motion-related data of the vessel 204. It should be noted that operation 1306 is analogous to operation 904 described with reference to FIG. 9. Therefore, it is not explained here again for the sake of brevity.

At operation 1308, the method 1300 includes adaptively determining a target area associated with the vessel 204 based on the change in the moving direction. It should be noted that the operation 1308 is analogous to the operation 906 described with reference to FIG. 9. Therefore, it is not explained here again for the sake of brevity.

At operation 1310, the method 1300 includes transmitting a display signal for facilitating the display of the target area associated with the vessel to a user. It should be noted that operation 1310 is analogous to operation 1008 described with reference to FIG. 10. Therefore, it is not explained here again for the sake of brevity.

The disclosed methods with reference to FIG. 9 to FIGS. 13, or one or more operations of the motion data receiver 206, the processing circuitry 208, or the condition determining circuitry 804 may be implemented using software including computer-executable instructions or machine-readable instructions stored on one or more computer-readable media (*e.g.,* non-transitory computer-readable media, such as one or more optical media discs, volatile memory components *(e.g.,* DRAM or SRAM), or non-volatile memory or storage components (*e.g.,* hard drives or solid-state non-volatile memory components, such as Flash memory components)) and executed on a computer (*e.g*., any suitable computer, such as a Multi-function device (MFD), Multi-function device black box (MFD-BB), a navigation device, a chart plotter, electronic chart display and information system (ECDIS), a laptop computer, netbook, Webbook, tablet computing device, smartphone, or other mobile computing devices). Such software may be executed, for example, on a single local computer or in a network environment (*e.g*., via the Internet, a wide-area network, a local-area network, a remote web-based server, a client-server network (such as a cloud computing network), or other such networks) using one or more network computers. Additionally, any of the intermediate or final data created and used during the implementation of the disclosed methods or systems may also be stored on one or more computer-readable media (*e.g*., non-transitory computer-readable media) and are considered to be within the scope of the disclosed technology. Furthermore, any of the software-based embodiments may be uploaded, downloaded, or remotely accessed through a suitable communication means. Such a suitable communication means includes, for example, the Internet, the World Wide Web, an intranet, software applications, cable (including fiber optic cable), magnetic communications, electromagnetic communications (including RF, microwave, and infrared communications), electronic communications, or other such communication means. In an embodiment, the motion data receiver 206, the condition determining circuitry 804 and/or a combination thereof may be implemented within the processing circuitry 208 as a single chip, a stacked chip, etc., among other suitable implementations. In an example, the motion data receiver 206, the condition determining circuitry 804 and/or a combination thereof may be implemented as a module or block within the processing circuitry 208 as well.

All of the processes described herein may be embodied in, and fully automated via, software code modules executed by a computing system that includes one or more computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the embodiment, certain acts, events, or functions of any of the algorithms described herein can be performed in a different sequence, can be added, merged, or left out altogether (*e.g*., not all described acts or events are necessary for the practice of the algorithms). Moreover, in certain embodiments, acts or events can be performed concurrently, e.g., through multi-threaded processing, interrupt processing, or multiple processors or processor cores or on other parallel architectures, rather than sequentially. In addition, different tasks or processes can be performed by different machines and/or computing systems that can function together.

Although the present disclosure has been described with reference to specific exemplary embodiments, it is noted that various modifications and changes may be made to these embodiments without departing from the broad spirit and scope of the present disclosure. For example, the various operations, blocks, etc., described herein may be enabled and operated using hardware circuitry (for example, complementary metal-oxide semiconductor (CMOS) based logic circuitry), firmware, software, and/or any combination of hardware, firmware, and/or software (for example, embodied in a machine-readable medium). For example, the apparatuses and methods may be embodied using transistors, logic gates, and electrical circuits (for example, application-specific integrated circuit (ASIC) circuitry and/or in Digital Signal Processor (DSP) circuitry).

Particularly, the processing circuitry 208, condition determining circuitry 804, among other components of the apparatus 202 may be enabled using software and/or using transistors, logic gates, and electrical circuits (for example, integrated circuit circuitry such as ASIC circuitry). Various embodiments of the present disclosure may include one or more computer programs stored or otherwise embodied on a computer-readable medium, wherein the computer programs are configured to cause a processor or the computer to perform one or more operations. A computer-readable medium storing, embodying, or encoded with a computer program, or similar language, may be embodied as a tangible data storage device storing one or more software programs that are configured to cause a processor or computer to perform one or more operations. Such operations may be, for example, any of the steps or operations described herein. In some embodiments, the computer programs may be stored and provided to a computer using any type of non-transitory computer-readable media. Non-transitory computer-readable media include any type of tangible storage media. Examples of non-transitory computer-readable media include magnetic storage media (such as floppy disks, magnetic tapes, hard disk drives, etc.), optical magnetic storage media (*e.g*., magneto-optical disks), CD-ROM (compact disc read-only memory), CD-R (compact disc recordable), CD-R/W (compact disc rewritable), DVD (Digital Versatile Disc), BD (BLU-RAY^{®} Disc), and semiconductor memories (such as mask ROM, PROM (programmable ROM), EPROM (erasable PROM), flash memory, RAM (random access memory), etc.). Additionally, a tangible data storage device may be embodied as one or more volatile memory devices, one or more non-volatile memory devices, and/or a combination of one or more volatile memory devices and non-volatile memory devices. In some embodiments, the computer programs may be provided to a computer using any type of transitory computer-readable media. Examples of transitory computer-readable media include electric signals, optical signals, and electromagnetic waves. Transitory computer-readable media can provide the program to a computer via a wired communication line *(e.g.,* electric wires, and optical fibers) or a wireless communication line.

The various illustrative logical blocks and modules described in connection with the embodiments disclosed herein can be implemented or performed by a machine, such as a processor. A processor can be a microprocessor, but in the alternative, the processor can be a controller, microcontroller, or state machine, combinations of the same, or the like. A processor can include electrical circuitry configured to process computer-executable instructions. In another embodiment, a processor includes an application specific integrated circuit (ASIC), a field programmable gate array (FPGA) or other programmable device that performs logic operations without processing computer-executable instructions. A processor can also be implemented as a combination of computing devices, *e.g*., a combination of a digital signal processor (DSP) and a microprocessor, a plurality of microprocessors, one or more microprocessors in conjunction with a DSP core, or any other such configuration. Although described herein primarily with respect to digital technology, a processor may also include primarily analog components. For example, some or all of the signal processing algorithms described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

Any process descriptions, elements, or blocks in the flow diagrams described herein and/or depicted in the attached figures should be understood as potentially representing modules, segments, or portions of code which include one or more executable instructions for implementing specific logical functions or elements in the process. Alternate implementations are included within the scope of the embodiments described herein in which elements or functions may be deleted, executed out of order from that shown, or discussed, including substantially concurrently or in reverse order, depending on the functionality involved as would be understood by those skilled in the art.

It is to be understood that not necessarily all objects or advantages may be achieved in accordance with any particular embodiment described herein. Thus, for example, those skilled in the art will recognize that certain embodiments may be configured to operate in a manner that achieves or optimizes one advantage or group of advantages as taught herein without necessarily achieving other objects or advantages as may be taught or suggested herein.

It should be emphasized that many variations and modifications may be made to the above-described embodiments, the elements of which are to be understood as being among other acceptable examples. All such modifications and variations are intended to be included herein within the scope of this disclosure and protected by the following claims.

## Claims

1. An apparatus (202), comprising:
a motion data receiver (206) configured, at least in part, to determine a motion-related data of a vessel (204); and
processing circuitry (208) communicably coupled to the motion data receiver (206), the processing circuitry (208) comprising:
a moving direction monitoring module (210) configured to determine a change in a moving direction of the vessel (204) based at least on the motion-related data of the vessel (204), and
a target area determination module (212) adaptively configured to determine a target area associated with the vessel (204) based on the change in the moving direction.

2. The apparatus (202) as claimed in claim 1, wherein the moving direction is an instantaneous moving direction, and wherein the apparatus (202) is further configured, at least in part to, adaptively determine the target area by calculating a shift from a current target area to a new target area based on an instantaneous change in the moving direction.

3. The apparatus (202) as claimed in claim 1, wherein the motion data receiver (206) is further configured, at least in part, to determine the motion-related data of the vessel (204) based on a rudder angle data received from a rudder reference unit (404) associated with the vessel (204).

4. The apparatus (202) as claimed in claim 1, wherein the motion data receiver (206) is further configured, at least in part, to determine the motion-related data of the vessel (204) based on steering wheel angle data received from a steering wheel (410) associated with the vessel (204).

5. The apparatus (202) as claimed in claim 1, wherein the motion data receiver (206) is further configured, at least in part, to determine the motion-related data of the vessel (204) based on heading deviation data received from a heading sensor (416) associated with the vessel (204).

6. The apparatus (202) as claimed in claim 1, wherein the motion data receiver (206) is further configured, at least in part, to:
receive route data of the vessel (204) from a user interface (424), the route data comprising a plurality of waypoints; and
determine the motion-related data of the vessel (204) based on the received route data.

7. The apparatus (202) as claimed in claim 1, further comprising an object detection device (604) communicably coupled to the processing circuitry (208), configured at least in part, to obtain a location data of one or more objects within a predetermined area, wherein the predetermined area is based at least on an operating range associated with the object detection device (604).

8. The apparatus (202) as claimed in claim 7, wherein the processing circuitry (208) is further configured, at least in part, to:
receive the location data from the object detection device (604); and is further comprising:
a alarm signal generator (608) configured to trigger an alarm signal based at least on determining if the one or more objects are located in the target area.

9. The apparatus (202) as claimed in claim 7, wherein the object detection device (604) comprises at least one of a radar, a sonar, and a navigation device.

10. The apparatus (202) as claimed in claim 1, further comprising a user interface (424) communicably coupled to the motion data receiver (206) and the processing circuitry (208), wherein:
the processing circuitry (208) is further comprising a display signal generator (420); and
the user interface (424) is configured, at least in part, to:
receive one or more user inputs related to a position and a layout of the target area; and
receive a display signal, transmitted by display signal generator (420), for facilitating display of the target area associated with the vessel (204) to a user.

11. The apparatus (202) as claimed in claim 1, further comprising:
condition determining circuitry (804) communicably coupled to the processing circuitry (208), the condition determining circuitry (804) configured, at least in part, to:
determine set and drift condition data based on one or more set and drift conditions in vicinity of the vessel (204), and
transmit the set and drift condition data to the processing circuitry (208).

12. The apparatus (202) as claimed in claim 11, wherein the processing circuitry (208) is further configured, at least in part, to:
receive the set and drift condition data; and
determine an error value in the motion-related data based on the set and drift conditions; and
calibrate the motion-related data based on the determined error value.

13. The apparatus (202) as claimed in claim 12, wherein the set and drift conditions comprise at least one of a leeway motion, a steering error, and a water current.

14. A method, comprising:
determining a motion-related data of a vessel;
determining a change in a moving direction of the vessel based at least on the motion-related data of the vessel; and
adaptively determining a target area associated with the vessel based on the change in the moving direction.

15. A non-transitory computer-readable storage medium having stored thereon machine-readable instructions that, when executed by one or more processors of an apparatus, cause the apparatus to perform a method comprising:
determining a motion-related data of a vessel;
determining a change in a moving direction of the vessel based at least on the motion-related data of the vessel; and
adaptively determining a target area associated with the vessel based on the change in the moving direction.
